# EUROPÄISCHE PATENTSCHRIFT

(11) **EP 3 243 580 B1**
(45) Veröffentlichungstag und Bekanntmachung des Hinweises auf die Patenterteilung: **18.03.2020**
(21) Anmeldenummer: 17170050.3
(22) Anmeldetag: 09.05.2017
(51) Int. Cl.: B21D 53/78, B23P 15/04, F01D 5/28, F04D 29/28, F04D 29/32, F01D 5/14, B21D 22/02

(54) **VERFAHREN ZUR HERSTELLUNG EINER KANTENABDECKUNG FÜR EIN SCHAUFELBAUTEIL EINES FLUGTRIEBWERKS ODER EINER GASTURBINE SOWIE KANTENABDECKUNG FÜR EIN SCHAUFELBAUTEIL**
METHOD FOR PRODUCING AN EDGE COVER FOR A BLADE COMPONENT OF AN AIRCRAFT ENGINE OR A GAS TURBINE AND EDGE COVER FOR A BLADE COMPONENT
PROCÉDÉ DE FABRICATION D'UN RENFORT POUR UN COMPOSANT D'AUBE D'UN MOTEUR À PROPULSION OU D'UNE TURBINE À GAZ ET RENFORT POUR UN COMPOSANT D'AUBE

(30) Priorität: 09.05.2016 DE 102016108527
(43) Veröffentlichungstag der Anmeldung: 15.11.2017
(73) Patentinhaber: LEISTRITZ Turbinentechnik GmbH, 42859 Remscheid (DE)
(72) Erfinder: Dr.-Ing. Baumgärtner, Marianne, 90402 Nürnberg (DE); Janschek, Peter, 40593 Düsseldorf (DE)
(74) Vertreter: Lindner Blaumeier Patent- und Rechtsanwälte

(56) Entgegenhaltungen:
- EP-A1- 2 281 645
- EP-A2- 2 586 972
- WO-A1-2011/064406
- WO-A1-2013/156711
- US-A1- 2012 114 494

## Beschreibung

Die Erfindung betrifft ein Verfahren zur Herstellung einer im Querschnitt V-förmigen metallenen Kantenabdeckung zur Abdeckung eines Kantenbereichs eines Schaufelbauteils für ein Flugtriebwerk oder eine Gasturbine. Ein Verfahren zur Herstellung einer solche Kantenabdeckung ist aus WO 2011/064406 A1 bekannt.

Flugtriebwerke oder andere Gasturbinen umfassen üblicherweise mehrere Schaufelkränze, die mit hoher Geschwindigkeit rotieren. Je nach Position des Schaufelkranzes im Turbinenstrang sind die Schaufeln aus metallischen oder nicht metallischen Werkstoffen, wobei die jeweilige Materialwahl nicht zuletzt abhängig vom Belastungsgrad der Schaufeln erfolgt. So werden extrem belastete Schaufeln aus hochfesten metallischen Werkstoffen gefertigt, während geringer belastete Schaufeln aus weniger festen metallischen Werkstoffen, wie beispielsweise aus Aluminium oder auch aus nicht metallischen Werkstoffen, wie beispielsweise Kohlenstofffaserverbundwerkstoffen hergestellt werden. Ein Beispiel für den Einsatz solcher Schaufeln aus derartigen Werkstoffen sind Fanschaufeln in einem Fantriebwerk.

Insbesondere die Eintrittskante, also die in Rotationsrichtung vorlaufende Kante jeder Schaufel ist jedoch besonderen Belastungen ausgesetzt, weshalb sie geschützt werden muss, beispielsweise gegen Vogelschlag oder dergleichen. Zu diesem Zweck ist es bekannt, die Kanten von Schaufeln aus weniger festen metallischen Werkstoffen oder aus nicht metallischen Werkstoffen mit einer Kantenabdeckung zu versehen, die aus einem entsprechenden widerstandsfähigen metallischen Werkstoff gefertigt ist. Diese extrem dünnwandigen, metallischen Kantenabdeckungen, die beispielsweise aus hochfesten Titanlegierungen oder aus anderen hochfesten Materialien hergestellt sind, weisen komplexe Geometrien auf, die der aerodynamischen Auslegung, also der konkreten Geometrie der zu schützenden Schaufelkante der sich beidseits anschließenden Schaufelblattkontur, unter Umständen der sich anschließenden Blattendkontur folgen. Die Kantenabdeckungen sind demzufolge in mehreren Richtungen gekrümmt und weisen stark unterschiedliche Dicken auf. Insbesondere ist die eigentliche Kante in der Regel gegenüber den Seitenflächen, die sich an die Konvex- bzw. Konkavseite der Schaufel anschmiegen, aufgedickt, also im vorlaufenden Bereich materialverstärkt, wobei der Grad der Aufdickung über die Länge der Kante variieren kann.

Ein anderes Verfahren zur Herstellung einer solchen Kantenabdeckung ist beispielsweise aus EP 2 229 248 B1 bekannt. Dort wird die komplexe innere Kontur, die die fertige Kantenabdeckung aufweisen soll, und die quasi als Negativ der positiven Kontur der Schaufelkante entspricht, durch Fräsen einer quasi aufgeklappten Geometrie und anschließendem In-Form-Biegen der an den eigentlichen Kantenabschnitt anschließenden Seitenteile durch Warmumformung unter Nutzung eines Dorns hergestellt. Der Herstellung aus einem Vollmaterial unter Nutzung abtragender Verfahren in Kombination mit Umformprozessen ist sehr aufwendig und im Wesentlichen für einfachere Geometrien geeignet.

Der Erfindung liegt das Problem zugrunde, ein Verfahren anzugeben, das die Herstellung von Kantenabdeckungen auch mit komplexen Innengeometrien auf einfache Weise ermöglicht.

Zur Lösung dieses Problems ist erfindungsgemäß ein Verfahren zur Herstellung einer im Querschnitt V-förmigen metallenen Kantenabdeckung vorgesehen, mit folgenden Schritten:
- dreidimensionales Umformen eines metallenen rohrförmigen Halbzeugs in wenigstens einem Umformschritt zur Bildung eines rohrförmigen Umformkörpers, derart, dass ein Teil der dreidimensionalen Geometrie der Innenwandung des Umformkörpers einem Negativ der dreidimensionalen Geometrie des abzudeckenden Kantenbereichs entspricht,
- Aufbringen eines metallenen Materials auf die Außenseite des rohrförmigen Umformkörpers im Bereich einer umformtechnisch gebildeten gerundeten Kante des Umformkörpers,
- bereichsweise mechanische Bearbeitung der Außenseite des rohrförmigen Umformkörpers zur Ausbildung einer definierten Außenkontur,
- Entfernen eines oder mehrerer Abschnitte des rohrförmigen Umformkörpers zur Ausbildung der V-förmigen Kantenabdeckung.

Die Erfindung schlägt ein neuartiges Verfahren zur Herstellung einer solchen Kantenabdeckung ausgehend von einem metallenen rohrförmigen Halbzeug vor, das dreidimensional umgeformt wird, mit dem Ziel, dass ein Teil der dreidimensionalen Geometrie der Innenwandung des Umformkörpers einem Negativ der dreidimensionalen Geometrie des abzudeckenden Kantenbereichs entspricht. Das heißt, dass nach der dreidimensionalen Umformung die Innengeometrie, die bei der fertigen Kantenabdeckung exakt der Außengeometrie des abzudeckenden Kantenabschnitts der Schaufel entspricht, bereits endkonturfertig ausgebildet ist. Weitere Bearbeitungsschritte im Bereich der Innenwandung respektive der späteren Innengeometrie der Kantenabdeckung sind nicht erforderlich, vielmehr wird diese allein umformtechnisch hergestellt. Ausgangspunkt ist ein entsprechendes rohrförmiges Halbzeug, das mittels einer geeigneten Umformtechnik dreidimensional umgeformt wird. Es wird also ein von seiner Ursprungsgeometrie sehr einfaches Halbzeug verwendet, wobei die Wandstärke des verwendeten rohrförmigen Halbzeugs den maßlichen Erfordernissen der sich an die Kante anschließenden Seitenteile angepasst ist.

Nach dem Umformen wird erfindungsgemäß auf den Umformkörper außenseitig im Bereich einer umformtechnisch gebildeten gerundeten Kante in einem additiven Verfahren metallenes Material aufgebracht, um den Umformkörper in diesem Bereich lokal aufzudicken. Wie beschrieben wird ein Halbzeug verwendet, dessen Dicke den an den eigentlich aufgedickten Kantenbereich anschließende Seitenteilen oder Seitenwangen der U-förmigen Geometrie entspricht oder darauf abgestellt ist. Weisen die Seitenteile beispielsweise im unmittelbaren Anschluss an den durch den metallenen Materialauftrag aufgedickten Bereich eine Dicke von 3 mm auf, die an der fertigen Kantenabdeckung beispielsweise auf 0,3 mm ausläuft, so wird ein Rohr verwendet, das beispielsweise 3,5 - 4 mm stark ist. Die Dicke der Kantenabdeckung im eigentlichen Kantenbereich, also dem Bereich, der in unmittelbarer Verlängerung der Schaufelblattkante angeordnet wird, ist jedoch deutlich größer, sie beträgt beispielsweise 25 - 35 mm oder mehr. Um diesen aufgedickten Bereich zu realisieren, wird nun erfindungsgemäß auf den Umformkörper im Rahmen eines additiven Verfahrens metallenes Material aufgebracht. Im nächsten Schritt erfolgt nun eine zumindest bereichsweise mechanische Bearbeitung der Außenseite des rohrförmigen Umformkörpers zur Ausbildung einer definierten Außenkontur. Der Umformkörper wird also ausschließlich außenseitig entsprechend mechanisch bearbeitet, um eine definierte Außenkontur auszubilden. Hierzu wird Material im aufgedickten Bereich entsprechend abgetragen, wie auch die Abschnitte des Umformkörpers, die die Seitenteile bilden, entsprechend bearbeitet werden, so dass die entsprechenden Wandstärkenreduzierungen, sofern erforderlich, erreicht werden.

Nach Beendigung dieser außenseitigen Bearbeitung liegt folglich ein Umformkörper vor, der bereichsweise eine dreidimensionale Innengeometrie aufweist, die exakt der Außengeometrie des abzudeckenden Kantenbereichs des Schaufelblatts entspricht, und der auch bereichsweise eine dreidimensionale Außengeometrie aufweist, die der entsprechenden Endkontur der gewünschten Kantenabdeckungen entspricht. Die Kantenabdeckung ist also nach dem mechanischen Bearbeiten ein integraler Teil des Umformkörpers, der im nächsten Schritt aus dem Umformkörper "herausgearbeitet" wird.

Hierzu wird ein oder werden mehrere Abschnitte des rohrförmigen Umformkörpers zur Ausbildung der V-förmigen Kantenabdeckung entfernt. Der nach wie vor geschlossene rohrförmige Umformkörper wird also über seine Länge geöffnet und gegebenenfalls in seiner Länge angepasst, es wird also mithin ein Teil des Umformkörpers entfernt, der nicht die eigentliche Kantenabdeckung bildet. Nach Entfernen dieses einen oder dieser mehreren Abschnitte liegt die fertige Kantenabdeckung vor.

Das erfindungsgemäße Verfahren lässt aufgrund der Herstellung der dreidimensionalen Innengeometrie durch dreidimensionales Umformen eines rohrförmigen Halbzeugs eine sehr exakte Negativabbildung des Schaufelkantenabschnitts zu. Eine materialabtragende Bearbeitung zur Herstellung dieser komplexen Geometrie ist nicht erforderlich. Vielmehr erfolgt eine mechanische Bearbeitung ausschließlich an der Außenseite des bereits dreidimensional verformten Umformkörpers, was wesentlich einfacher ist.

Wenngleich bei einfacheren Geometrien das dreidimensionale Umformen auch in einem einzigen Umformschritt erfolgen kann, sieht eine zweckmäßige Weiterbildung der Erfindung vor, dass das dreidimensionale Umformen in zwei separaten Umformschritten erfolgt, wobei in einem ersten Umformschritt eine Grobumformung zur Ausbildung einer gewundenen Form entsprechend der gewundenen Form des abzudeckenden Kantenbereichs erfolgt, und wobei in einem zweiten Umformschritt eine Feinumformung zur Ausbildung der dreidimensionalen Geometrie der Innenwandung erfolgt. Es ist also eine mehrstufige Umformung vorgesehen, wobei bei Bedarf auch noch ein weiterer Feinumformungsschritt erfolgen kann, wenn dies die Komplexität der herauszuarbeitenden Innengeometrie verlangt.

Der erste Grobumformungsschritt führt somit zu einem rohrförmigen Umformkörper mit einer gewundenen Struktur entsprechend der Windung der abzudeckenden Schaufelkante. Der zweite dreidimensionale Umformschritt, die Feinumformung, führt sodann zur Ausbildung der eigentlichen Zielkontur bzw. Zielgeometrie der Innenwandung, welche Zielgeometrie die negative Geometrie der Positivkontur des abzudeckenden Kantenabschnitts der Schaufel ist. Zur entsprechenden Umformung wird das ursprünglich zylindrische rohrförmige Halbzeug entsprechend gedrückt bzw. gepresst, wozu ein oder mehrere geeignete Presswerkzeuge verwendet werden.

Bevorzugt erfolgt die Umformung isotherm durch Pressen, wobei für die verschiedenen Umformschritte natürlich entsprechend ausgelegte Gesenke verwendet werden. Die Temperatur beim isothermen Pressen sollte zwischen 600 - 1050 °C betragen, wobei natürlich die konkrete Umformtemperatur abhängig davon ist, aus welchem metallenen Werkstoff das verwendete rohrförmige Halbzeug besteht. Das Halbzeug kann aus verschiedenen Stählen oder Legierungen, insbesondere Titanlegierungen gewählt werden, und je nach verwendetem Material und dessen Umformeigenschaften erfolgt die entsprechende Temperatureinstellung.

Auch die Umformgeschwindigkeit wird je nach verwendetem Halbzeugmaterial gewählt. Sie wird so gewählt respektive in Abhängigkeit des Werkstoffs angepasst, dass eine superplastische Umformung einsetzt. Die Umformgeschwindigkeit liegt je nach verwendetem Material zwischen 10⁻⁶ - 10⁻¹ s⁻¹. Verwendet wird wie beschrieben ein Presswerkzeug, das ein isothermes Pressen respektive Umformen ermöglicht. Das insbesondere für die Feinumformung verwendete Gesenk weist eine Gravur auf, die die exakte gewünschte Innenkontur, also die Zielgeometrie der Kantenabdeckung besitzt, vergrößert, um die Dicke des rohrförmigen Halbzeugs. Wie bereits beschrieben ist das rohrförmige Halbzeug mehrere Millimeter stark, je nachdem, wie letztlich die Kantenabdeckung im Bereich ihrer Seitenteile auszulegen ist. Der Durchmesser des verwendeten Rohres beträgt mehrere zehn Millimeter, er liegt im Bereich zwischen 50 - 150 mm, je nach Größe und Geometrie des abzudeckenden Schaufelkantenbereichs. Das rohrförmige Halbzeug kann ein nahtlos gezogenes Halbzeug oder ein längsgeschweißtes Halbzeug sein.

Die Umformung des rohrförmigen Halbzeugs erfolgt bevorzugt unter Schutzgas oder Vakuum, sofern das verwendete Halbzeugmaterial dies erfordert.

Während der Umformung wird das Halbzeug je nach auszubildender Geometrie mehr oder weniger stark deformiert. Um das rohrförmigen Halbzeug respektive den rohrförmigen Umformkörper während der Umformung abzustützen ist es denkbar, in dem Halbzeug Mittel zur innenseitigen Abstützung vorzusehen. Derartige Mittel zur innenseitigen Abstützung können auch vorgesehen sein, wenn der rohrförmige Umformkörper mechanisch an der Außenseite bearbeitet wird, und/oder wenn der oder die Abschnitte des Umformkörpers im letzten Bearbeitungsschritt zur Ausarbeitung der Kantenabdeckung entfernt werden. Über dieses innenseitige Abstützmittel wird das Halbzeug respektive die Umformkörper während der jeweiligen Bearbeitung mechanisch abgestützt, so dass vermieden wird, dass er aus welchen Gründen auch immer zu stark deformiert wird oder ähnliches.

Als Abstützmittel kann beispielsweise ein Pulver, beispielsweise Zirkonoxidmehl, in das Innere des Halbzeugs oder des Umformkörpers gefüllt werden.

Zur Aufdickung im Kantenbereich wird wie beschrieben der Umformkörper in einem additiven Verfahren mit einem metallenen Material belegt. Dieses aufzubringende Material ist bevorzugt dasselbe Material wie das des Umformkörpers, wenn der Umformkörper bereits aus einem hinreichend festen oder hochfesten Material ist, das die entsprechenden physikalischen und mechanischen Eigenschaften, die die Kantenabdeckung aufweisen soll, bereits besitzt. Alternativ dazu kann das aufzubringende Material auch ein gegenüber dem Material des Umformkörpers festeres Material sein. Dieses wird verwendet, wenn das eigentliche Halbzeugmaterial noch nicht die gewünschten physikalischen oder mechanischen Eigenschaften aufweist. Ziel ist es in der Regel, dass der eigentliche Kantenbereich der Kantenabdeckung aus einem hochfesten Material gebildet ist. Ist also das Halbzeug bereits aus einem hochfesten Material, so kann ohne weiteres dasselbe Material zur Aufdickung aufgebracht werden. Ist das Halbzeug aus einem demgegenüber weicheren Material, so wird als aufzudickendes Material ein entsprechend hochfestes Metall aufgebracht.

Das eigentliche additive Aufbringen des Materials erfolgt bevorzugt durch Schweißen, insbesondere Laserschweißen oder WIG-Schweißen, wobei diese Aufzählung nicht abschließend ist. Bevorzugt wird das Material unter Schutzgas oder im Vakuum aufgebracht.

Eine zweckmäßige Weiterbildung der Erfindung sieht vor, dass nach dem Aufbringen des Materials eine Temperaturbehandlung des Umformkörpers zum Spannungsfrei-Glühen erfolgt, um einen etwaigen spannungsbedingten Bauteilverzug auszuschließen. Das Spannungsfrei-Glühen erfolgt bevorzugt in einem Temperaturbereich zwischen 650 - 850 °C für die Dauer von 0,5 - 5 h, wobei die konkrete Temperatur und Dauer wiederum in Abhängigkeit des verwendeten Werkstoffs des Halbzeugs, gegebenenfalls unter Berücksichtigung des verwendeten Werkstoffs des aufgebrachten metallenen Materials, gewählt wird.

Wie beschrieben wird im letzten Schritt ein oder werden mehrere Abschnitte des Umformkörpers entfernt, um die endgültige Kantenabdeckung auszubilden. Dieses Entfernen kann spanend oder trennend erfolgen. Der spanende Abtrag kann beispielsweise durch Fräsen erfolgen. Bevorzugt wird hierzu eine Fünf-Achs-Fräsmaschine verwendet, wobei mitunter eine Mehrfachaufspannung erforderlich ist. Der besondere Vorteil des erfindungsgemäßen Verfahrens, das wie beschrieben von einem rohrförmigen Halbzeug ausgeht, ist, dass der zu bearbeitende Umformkörper nach wie vor rohrförmig ist, das heißt, dass seine Eigengeometrie auch während dieser mechanischen Fräsbearbeitung stabilisierend wirkt. Wie beschrieben besteht jedoch die Möglichkeit, unter Verwendung von im Inneren des Umformkörpers eingebrachter Abstützmittel wie beispielsweise dem beschriebenen Zirkonoxidmehl eine Stabilisierung zu erwirken.

Das Trennen des oder der Abschnitte erfolgt beispielsweise durch Laserschneiden oder Wasserstrahlschneiden. Hierbei wird also der oder werden die abzutrennenden Abschnitte definiert abgeschnitten. Auch hierbei wirkt sich die rohrförmige Geometrie des Umformkörpers stabilisierend aus, wobei auch bei diesen Trennverfahren selbstverständlich entsprechende innere Abstützmittel verwendet werden können.

Das verwendete Halbzeug selbst ist bevorzugt aus einer Titanlegierung, insbesondere TiAl6V4. Werden Titanlegierungen unterschiedlicher Art verwendet, so liegt die Umformtemperatur beispielsweise im Bereich zwischen 840 - 1050 °C, die Umformgeschwindigkeit liegt im Bereich zwischen 10⁻⁵ - 10⁻¹ s⁻¹. Das Spannungsfrei-Glühen dieser unterschiedlichen Titanlegierungen erfolgt bei Temperaturen zwischen 700 - 750 °C für die Dauer von 0,5 - 4 h.

Bei Verwendung von TiAl6V4, mit dem Ziel einer superplastischen Umformung, wird eine Umformtemperatur von 900 - 950 °C, bevorzugt 925 °C gewählt, bei einer Umformgeschwindigkeit von 10⁻⁵ - 10⁻² s⁻¹. Das Spannungsfrei-Glühen erfolgt auch hier bei einer Temperatur im Bereich von 700 - 750 °C, ebenfalls für einen Zeitraum von 0,5 - 4 h.

Neben dem Verfahren selbst betrifft die Erfindung ferner eine Kantenabdeckung, gemäß Anspruch 18 hergestellt aus einem umgeformten Halbzeug, mit einem außenseitigen kantenseitigen Materialauftrag, wobei die Außenseite materialabtragend bearbeitet ist.

Bei dieser Kantenabdeckung handelt es sich bevorzugt um eine Kantenabdeckung, die gemäß dem vorstehend beschriebenen Verfahren hergestellt ist.

Die Kantenabdeckung selbst wird bevorzugt zum Abdecken der vorlaufenden Schaufelkante verwendet, ist also an die Geometrie der vorlaufenden Schaufelblattkante angepasst. Grundsätzlich denkbar ist es aber auch, die Kantenabdeckung zum Ansetzen an die Kantengeometrie der nachlaufenden Schaufelblattkante anzupassen, sie also an die nachlaufende Kante der Schaufel anzubringen.

Weitere Vorteile und Einzelheiten ergeben sich aus dem im Folgenden beschriebenen Ausführungsbeispiel sowie anhand der Zeichnungen. Dabei zeigen:
- Fig. 1: eine Ansicht eines zur Herstellung der Kantenabdeckung zu verwendenden Halbzeuges in Form eines Rohres in einer Seitenansicht (a)) und einer Querschnittansicht (b)),
- Fig. 2: das Halbzeug nach Durchführung der Grobumformung in einer Seitenansicht (a)) und einer Querschnittsansicht (b)),
- Fig. 3: den grob umgeformten Umformkörper aus Fig. 2 nach der Feinumformung in einer Seitenansicht (a)) und einer Querschnittsansicht (b)),
- Fig. 4: den fein umgeformten Umformkörper aus Fig. 3 nach Aufbringen des metallenen Materials und bereichsweiser mechanischer Bearbeitung des Umformkörpers in einer Seitenansicht (a)) und einer Querschnittsansicht (b)), und
- Fig. 5: die fertige Kantenabdeckung nach Entfernen eines oder mehrerer Abschnitte des Umformkörpers aus Fig. 4 in einer Seitenansicht (a)) und einer Querschnittsansicht (b)).

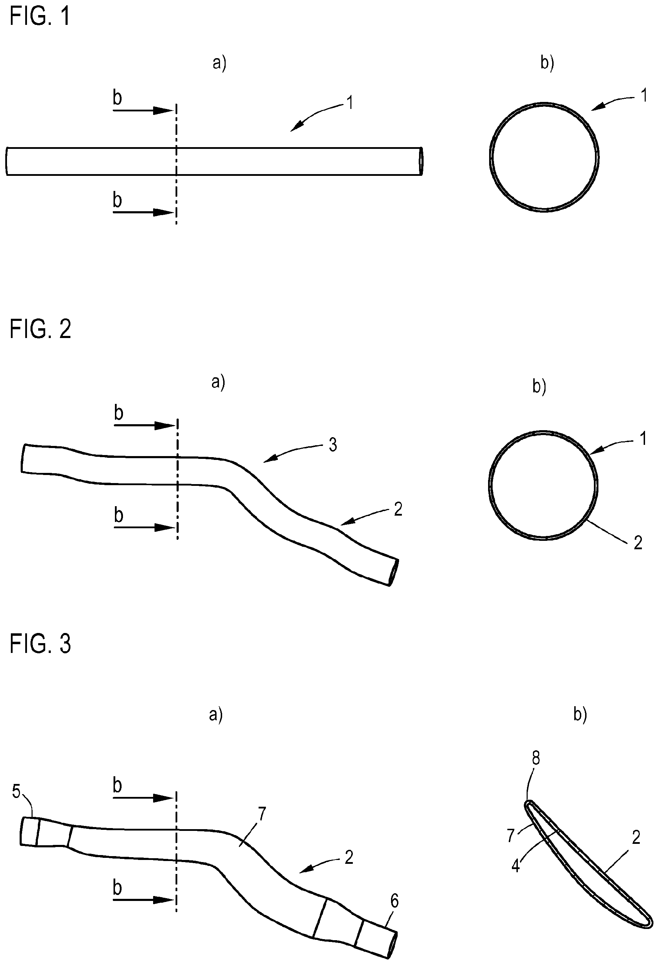

Anhand der Fig. 1 - 5 wird nachfolgend das Verfahren zur Herstellung einer im Querschnitt V-förmigen metallenen Kantenabdeckung zur Abdeckung eines Kantenbereichs eines Schaufelbauteils für ein Flugtriebwerk oder einer Gasturbine näher erläutert, wie auch die Kantenabdeckung selbst.

Das Ausgangsbauteil für die Herstellung der Kantenabdeckung ist ein metallenes rohrförmiges Halbzeug 1, das im gezeigten Beispiel einen kreisrunden Querschnitt aufweist. Bei dem Halbzeug 1 handelt es sich um ein nahtlosgezogenes oder längsgeschweißtes Rohr, vorzugsweise aus einer Titanlegierung, insbesondere aus TiAl6V4. Als Ausgangswerkstoff kann auch ein Stahlwerkstoff oder eine Nickelbasislegierung verwendet werden.

Dieses rohrförmige Halbzeug wird nun einem ersten Umformschritt, einer Grobumformung unterzogen, um ihm eine gewundene Form entsprechend der gewundenen Form des abzudeckenden Kantenbereichs des Schaufelbauteils zu verleihen. Dies ist in Fig. 2 gezeigt, die den Umformkörper 2 darstellt. Ersichtlich weist der grob umgeformte Umformkörper 2, der nach wie vor einen runden Querschnitt aufweist, siehe die Teilfigur b) in Fig. 2, eine von der längsgestreckten Form deutlich abweichende Form auf. Diese Grundgeometrie entspricht bereichsweise der gewundenen Geometrie des abzudeckenden Schaufelbereichs, und zwar primär im Bereich 3, welcher Bereich 3, worauf später noch eingegangen wird, die eigentliche Kante des umgeformten Halbzeugs respektive der fertigen Kantenabdeckung bildet.

Diese Grobumformung, also der erste Umformschritt, erfolgt durch isothermes Pressen bei einer Umformtemperatur von 600 - 1050 °C, die Umformgeschwindigkeit beträgt 10⁻⁶ - 10⁻¹ s⁻¹, wobei die Umformtemperatur respektive die Umformgeschwindigkeit in Abhängigkeit des verwendeten Materials gewählt wird. Die Umformung kann auch unter Schutzgas oder Vakuum erfolgen, wobei auch dies letztlich von den verwendeten Materialien für Werkstück und Werkzeug abhängt.

Nach Durchführung des ersten Umformschritts wird eine weitere Feinumformung, also ein zweiter Umformschritt vorgenommen, siehe Fig. 3. Der grob umgeformte Umformkörper 2 wird durch isothermes Pressen derart umgeformt, dass ein Teil der Innenwandung 4 des Umformkörpers 2 eine dreidimensionale Geometrie aufweist, die einem Negativ der dreidimensionalen Geometrie des abzudeckenden Kantenbereichs entspricht. Da der Umformkörper 2 nach wie vor ein länglicher Hohlkörper ist, weist zwangsläufig nur ein Teil der Innenwand des Umformkörpers die gewünschte dreidimensionale Geometrie auf, da, wie sich aus der nachfolgenden Beschreibung ergibt, nur ein Teil des Umformkörpers die fertige Kantenabdeckung bildet.

Die Umformung erfolgt wiederum wie beschrieben durch isothermes Pressen, die Umformtemperatur liegt auch hier im Bereich zwischen 600 - 1050 °C, die Umformgeschwindigkeit liegt im Bereich 10⁻⁶ - 10⁻¹ s⁻¹. Wiederum kann die Umformung unter Schutzgas oder im Vakuum erfolgen.

Die Temperatur und die Umformgeschwindigkeit im Rahmen des ersten und zweiten Umformschritts werden materialabhängig so gewählt, dass eine superplastische Umformung erfolgt. Im Rahmen der Umformungen können auch mehrere Bauteile gleichzeitig umgeformt werden.

Wie Fig. 3 ferner zeigt erfolgt die Feinumformung im Rahmen des zweiten Umformschritts nur in einem ausgezeichneten Längsbereich des Umformkörpers 2. Die Enden 5, 6 bleiben unverformt, da der Umformkörper 2 an den Enden spätestens bei den nachfolgenden Schritten gehalten respektive fixiert wird und diese Bereiche, wie nachfolgend noch beschrieben wird, beschnitten werden.

Die beiden in den Fig. 2 und 3 beschriebenen und dargestellten Umformschritte erfolgen wie beschrieben durch isothermes Pressen unter Verwendung geeigneter Gesenke. Dabei kann während dieser Umformung ein Mittel zur innenseitigen Abstützung des rohrförmigen Halbzeugs 1 respektive des Umformkörpers 2 eingebracht werden, um das Halbzeug 1 respektive den Umformkörper 2 während des Umformkörpers zu stabilisieren. Ein solches Mittel kann beispielsweise ein Pulver, insbesondere Zirkonoxidmehl sein, das in das Halbzeug 1 respektive den Umformkörper 2 eingefüllt wird.

Der Umformkörper 2 weist folglich nach der Feinumformung gemäß Fig. 3 in einem Teilbereich der Außenwandung 7 eine dreidimensionale Geometrie auf, die der gewünschten dreidimensionalen Außengeometrie der fertigen Kantenabdeckung entspricht. Die Innenwandung 4 weist wie ausgeführt abschnittsweise eine dreidimensionale Geometrie auf, die so exakt wie möglich dem Negativ der dreidimensionalen Geometrie des abzudeckenden Kantenbereichs des Schaufelbauteils entspricht.

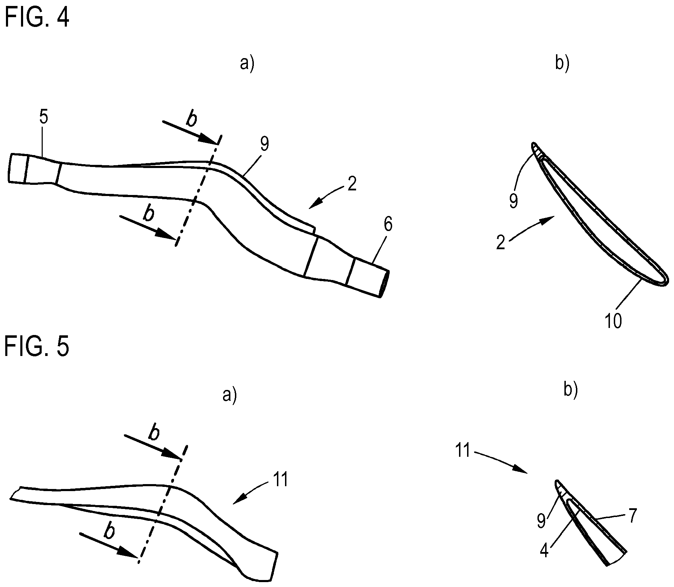

Der Umformkörper 2 gemäß Fig. 3 weist, siehe insbesondere Teilfigur 3 b), eine gerundete Kante 8 auf, die die außenliegende Kante des Schaufelbauteils übergreift. Diese Kante ist üblicherweise in Bezug auf die Drehrichtung des Schaufelbauteils vorlaufend, so dass dies auch für die Kante 8 der Kantenabdeckung gilt. Um die Kante 8 entsprechend stabil zu gestalten wird, siehe Fig. 4, auf diese umformtechnisch gebildete gerundete Kante des Umformkörpers 2 ein metallenes Material 9 aufgebracht, das, siehe insbesondere die Querschnittsdarstellung gemäß Fig. 4 b), am fertigen Bauteil die vorlaufende Kante der Kantenabdeckung bildet.

Das metallene Material 9 ist bevorzugt dasselbe Material wie das des Umformkörpers, vorausgesetzt, dass das Umformkörpermaterial bereits eine hinreichende Härte respektive physikalische und mechanische Parameter aufweist, die den Anforderungen genügen. Für den Fall, dass das Material des Umformkörpers weicher ist respektive nicht ausreichende mechanische Eigenschaften besitzt, kann das aufgebrachte metallene Material 9 auch demgegenüber härter sein.

Das metallene Material 9 wird beispielsweise durch Schweißen, wie z. B. Laserauftragschweißen oder WIG-Schweißen aufgebracht, bevorzugt wiederum unter Schutzgas oder im Vakuum.

Da mit dem Aufbringen des metallenen Materials 9 zwangsläufig ein Wärmeeintrag in den Umformkörper verbunden ist, wird der Umformkörper nach dem Aufbringen des Metalls 9 bevorzugt im Rahmen einer Temperaturbehandlung spannungsfrei geglüht. Die Glühtemperatur beträgt bevorzugt 650 - 850 °C, die Glühdauer beträgt zwischen 0,5 - 5 h.

Nach dem Aufbringen des metallenen Materials 9 erfolgt eine bereichsweise mechanische Bearbeitung der Außenseite des nach wie rohrförmigen Umformkörpers 2 zur Ausbildung der definierten Außenkontur. Hierzu wird bevorzugt eine Fünf-Achs-Fräsmaschine, gegebenenfalls mit Mehrfachaufspannung, verwendet. Die Aufspannung erfolgt über die Enden 5 und 6 des Umformkörpers 2. Hierbei wird einerseits ausgehend von Fig. 4 das aufgebrachte Material 9 sowie dessen Übergang zur Außenseite 7 des Umformkörpers 2 bearbeitet, so dass dortseits ein grad- und stufenfreier homogener Übergang gegeben ist. Darüber hinaus wird durch die mechanische Bearbeitung auch die sonstige Außenseite des Umformkörpers 2 bearbeitet, so dass insbesondere die Wandstärke in einem gewünschten Maß reduziert wird und sich, wie in Bezug auf Fig. 5 noch beschrieben wird, eine definierte Wandstärkenverjüngung ergibt. Diese mechanische Bearbeitung erfolgt beispielsweise durch Schleifen oder Fräsen.

Um sowohl beim Aufbringen des metallenen Materials 9 als auch bei dieser mechanischen Bearbeitung sicherzustellen, dass der Umformkörper 2 hierbei nicht in seiner Geometrie beeinträchtigt wird, besteht auch hierbei die Möglichkeit, den nach wie vor rohrförmigen Umformkörper 2 innenseitig abzustützen, beispielsweise wiederum durch Einbringen eines Pulvers wie Zirkonoxidmehl.

Neben der materialabtragenden Bearbeitung der Außenseite des Umfangkörpers 2 ist es im letzten Arbeitsschritt noch erforderlich, einerseits die Enden 5 und 6 abzutrennen und andererseits den Umformkörper 5 längs zu öffnen, indem der dem aufgebrachten metallenen Material 9 gegenüberliegende Abschnitt 10 des Umformkörpers 2 entfernt wird, wie Fig. 5 in den beiden Teilfiguren a) und b) anschaulich zeigt. Diese Entfernung der Abschnitte, also der Enden 5 und 6 sowie 10, kann entweder spanend durch Fräsen erfolgen, alternativ kann auch ein Trennen durch Laserschneiden oder Wasserstrahlschneiden erfolgen.

Nach Abtrennen sämtlicher Abschnitte 5, 6 und 10 verbleibt die fertige Kantenabdeckung 11, wie sie in Fig. 5 gezeigt ist. Diese Kantenabdeckung 11 weist nun an ihrer Innenwandung 4 eine dreidimensionale Geometrie auf, die hochgenau dem Negativ der Ist-Geometrie des abzudeckenden Abschnitts des Schaufelbauteils entspricht. Auch die Außenwand 7 der Kantenabdeckung 11 weist eine Geometrie auf, die der Geometrie des Schaufelbauteils angepasst ist, so dass die Kantenabdeckung 11 die Schaufelbauteilgeometrie ohne nennenswerte Stufen oder ähnliches fortsetzt.

Durch das Ausbilden der über das Metall 9 verstärkten Kante weist darüber hinaus die Kantenabdeckung 11 eine hinreichende Härte respektive mechanische Stabilität in dem besonders beanspruchten Bereich auf.

Wenngleich in den Ausführungsbeispielen die Kantenabdeckung 11 zur Abdeckung eines vorlaufenden Kantenbereichs eines Schaufelbauteils eines Flugtriebwerks oder einer Gasturbine dient, ist es selbstverständlich möglich, eine in gleicher Weise hergestellte Kantenabdeckung auch zur Abdeckung der nachlaufenden Kante eines solchen Schaufelbauteils zu verwenden.

## Patentansprüche

1. Verfahren zur Herstellung einer im Querschnitt V-förmigen metallenen Kantenabdeckung zur Abdeckung eines Kantenbereichs eines Schaufelbauteils für ein Flugtriebwerk oder eine Gasturbine, **gekennzeichnet durch** die folgenden Schritten:
- dreidimensionales Umformen eines metallenen rohrförmigen Halbzeugs (1) in wenigstens einem Umformschritt zur Bildung eines rohrförmigen Umformkörpers (2), derart, dass ein Teil der dreidimensionalen Geometrie der Innenwandung (4) des Umformkörpers (2) einem Negativ der dreidimensionalen Geometrie des abzudeckenden Kantenbereichs entspricht,
- Aufbringen eines metallenen Materials (9) auf die Außenseite (7) des rohrförmigen Umformkörpers (2) im Bereich einer umformtechnisch gebildeten gerundeten Kante (8) des Umformkörpers (2),
- bereichsweise mechanische Bearbeitung der Außenseite (7) des rohrförmigen Umformkörpers (2) zur Ausbildung einer definierten Außenkontur,
- Entfernen eines oder mehrerer Abschnitte (5, 6, 10) des rohrförmigen Umformkörpers (2) zur Ausbildung der V-förmigen Kantenabdeckung (11).

2. Verfahren nach Anspruch 1, **dadurch gekennzeichnet, dass** das dreidimensionale Umformen in zwei separaten Umformschritten erfolgt, wobei in einem ersten Umformschritt eine Grobumformung zur Ausbildung einer gewundenen Form entsprechend der gewundenen Form des abzudeckenden Kantenbereichs, und wobei in wenigstens einem zweiten Umformschritt eine Feinumformung zur Ausbildung der dreidimensionalen Geometrie der Innenwandung (4) erfolgt.

3. Verfahren nach Anspruch 1 oder 2, **dadurch gekennzeichnet, dass** die Umformung isotherm durch Pressen erfolgt.

4. Verfahren nach einem der vorangehenden Ansprüche, **dadurch gekennzeichnet, dass** die Temperatur beim Umformen 600 - 1050 °C beträgt.

5. Verfahren nach einem der vorangehenden Ansprüche, **dadurch gekennzeichnet, dass** die Umformgeschwindigkeit 10⁻⁶ - 10⁻¹ s⁻¹ beträgt.

6. Verfahren nach einem der vorangehenden Ansprüche, **dadurch gekennzeichnet, dass** die Umformung unter Schutzgas oder im Vakuum erfolgt.

7. Verfahren nach einem der vorangehenden Ansprüche, **dadurch gekennzeichnet, dass** ein nahtlos gezogenes oder längsgeschweißtes rohrförmiges Halbzeug (1) verwendet wird.

8. Verfahren nach einem der vorangehenden Ansprüche, **dadurch gekennzeichnet, dass** in dem rohrförmigen Halbzeug (1) während der Umformung, und/oder in dem rohrförmigen Umformkörper (2) während der mechanischen Bearbeitung der Außenseite (7) und/oder der Entfernung des oder der Abschnitte (5, 6, 11) des Umformkörpers (2) Mittel zur innenseitigen Abstützung vorgesehen sind.

9. Verfahren nach Anspruch 8, **dadurch gekennzeichnet, dass** das Innere des Halbzeugs oder des Umformkörpers mit einem Pulver, insbesondere Zirkonoxidmehl gefüllt ist.

10. Verfahren nach einem der vorangehenden Ansprüche, **dadurch gekennzeichnet, dass** das aufzubringende Material (9) dasselbe Material wie das des Umformkörpers (2) ist, oder dass ein gegenüber dem Material des Umformkörpers (2) festeren Material aufgebracht wird.

11. Verfahren nach einem der vorangehenden Ansprüche, **dadurch gekennzeichnet, dass** das Material (9) durch Schweißen, insbesondere Laserauftragschweißen oder WIG-Schweißen aufgebracht wird.

12. Verfahren nach Anspruch 11, **dadurch gekennzeichnet, dass** das Material (9) unter Schutzgas oder im Vakuum aufgebracht wird.

13. Verfahren nach einem der vorangehenden Ansprüche, **dadurch gekennzeichnet, dass** nach dem Aufbringen des Materials (9) eine Temperaturbehandlung des Umformkörpers (2) zum Spannungsfrei-Glühen erfolgt.

14. Verfahren nach Anspruch 13, **dadurch gekennzeichnet, dass** die Temperatur 650 - 850 °C und die Dauer 0,5 - 5 h beträgt.

15. Verfahren nach einem der vorangehenden Ansprüche, **dadurch gekennzeichnet, dass** das Entfernen des oder der Abschnitte (5, 6, 10) des Umformkörpers (2) spanend oder trennend erfolgt.

16. Verfahren nach Anspruch 15, **dadurch gekennzeichnet, dass** das spanende Abtragen durch Fräsen und das Trennen durch Laserschneiden oder Wasserstrahlschneiden erfolgt.

17. Verfahren nach einem der vorangehenden Ansprüche, **dadurch gekennzeichnet, dass** ein Halbzeug (1) aus einer Titanlegierung, insbesondere TiAl6V4, einem Stahlwerkstoff oder einer Nickelbasislegierung verwendet wird.

18. Kantenabdeckung, insbesondere hergestellt nach dem Verfahren nach einem der Ansprüche 1 bis 17, bestehend aus einem aus einem dreidimensional umgeformten Rohr gebildeten und endseitig und längs durch Abtrennen von Rohrabschnitten gebildeten Umformkörper, dessen Kante von einem Metallauftrag, der dieselbe Härte wie das Rohr aufweist oder härter ist, gebildet ist, wobei der Umformkörper und der Metallauftrag außenseitig materialabtragend bearbeitet sind..

## Claims

1. Method for producing a metallic edge cover, which is V-shaped in cross section, for covering an edge region of a blade component for an aircraft engine or a gas turbine, **characterized by** the following steps:
- three-dimensional forming of a metallic tubular semi-finished product (1) in at least one forming step in order to form a tubular shaped body (2), such that a part of the three-dimensional geometry of the inner wall (4) of the shaped body (2) corresponds to a negative of the three-dimensional geometry of the edge region to be covered,
- application of a metallic material (9) to the outer side (7) of the tubular shaped body (2), in the region of a rounded edge (8) of the shaped body (2), said edge being formed by forming technology,
- mechanical machining of regions of the outer side (7) of the tubular shaped body (2) in order to form a defined outer contour,
- removal of one or more sections (5, 6, 10) of the tubular shaped body (2) in order to form the V-shaped edge cover (11).

2. Method according to Claim 1, **characterized in that** the three-dimensional forming is carried out in two separate forming steps, wherein, in a first forming step, rough forming is carried out to form a meandering shape which corresponds to the meandering shape of the edge region to be covered, and wherein, in at least a second forming step, fine forming is carried out to form the three-dimensional geometry of the inner wall (4).

3. Method according to Claim 1 or 2, **characterized in that** the forming is carried out isothermally by pressing.

4. Method according to one of the preceding claims, **characterized in that** the temperature during the forming operation is 600 - 1050°C.

5. Method according to one of the preceding claims, **characterized in that** the forming rate is 10⁻⁶ - 10⁻¹ s⁻¹.

6. Method according to one of the preceding claims, **characterized in that** the forming is carried out under a protective gas or in a vacuum.

7. Method according to one of the preceding claims, **characterized in that** use is made of a seamless drawn or longitudinally welded tubular semi-finished product (1).

8. Method according to one of the preceding claims, **characterized in that** means for internal support are provided in the tubular semi-finished product (1) during the forming, and/or in the tubular shaped body (2) during the mechanical machining of the outer side (7) and/or during the removal of the section or sections (5, 6, 11) of the shaped body (2).

9. Method according to Claim 8, **characterized in that** the interior of the semi-finished product or of the shaped body is filled with a powder, in particular ground zirconia.

10. Method according to one of the preceding claims, **characterized in that** the material (9) to be applied is the same as that of the shaped body (2), or **in that** a material which is stronger than the material of the shaped body (2) is applied.

11. Method according to one of the preceding claims, **characterized in that** the material (9) is applied by welding, in particular laser deposition welding or TIG welding.

12. Method according to Claim 11, **characterized in that** the material (9) is applied under a protective gas or in a vacuum.

13. Method according to one of the preceding claims, **characterized in that**, after the material (9) has been applied, the shaped body (2) is subjected to a heat treatment for the purposes of stress-relief annealing.

14. Method according to Claim 13, **characterized in that** the temperature is 650 - 850°C and the duration is 0.5 - 5 h.

15. Method according to one of the preceding claims, **characterized in that** the section or sections (5, 6, 10) of the shaped body (2) are removed by machining or cutting.

16. Method according to Claim 15, **characterized in that** the removal by machining is carried out by milling and the cutting is carried out by laser cutting or water jet cutting.

17. Method according to one of the preceding claims, **characterized in that** use is made of a semi-finished product (1) composed of a titanium alloy, in particular TiAl6V4, a steel material or a nickel-based alloy.

18. Edge cover, in particular produced by the method according to one of Claims 1 to 17, consisting of a shaped body which is formed of a three-dimensionally formed tube and is formed, at the end sides and longitudinally, by removing tube sections, the edge of said shaped body being formed by a metal deposit, which has the same hardness as, or is harder than, the tube, wherein the shaped body and the metal deposit have been machined so as to remove material on the outside.

## Revendications

1. Procédé de fabrication d'un recouvrement d'arête métallique de section transversale en forme de V pour recouvrir une zone d'arête d'un composant d'aube pour un moteur d'aéronef ou une turbine à gaz, **caractérisé par** les étapes suivantes :
- façonnage tridimensionnel d'un produit semi-fini tubulaire métallique (1) en au moins une étape de façonnage pour former un corps façonné tubulaire (2), de telle sorte qu'une partie de la géométrie tridimensionnelle de la paroi intérieure (4) du corps façonné (2) corresponde à un négatif de la géométrie dimensionnelle de la zone d'arête à recouvrir,
- application d'un matériau métallique (9) sur le côté extérieur (7) du corps façonné tubulaire (2) dans la région d'une arête arrondie (8), formée par une technique de façonnage, du corps façonné (2),
- usinage mécanique par zones du côté extérieur (7) du corps façonné tubulaire (2) pour réaliser un contour extérieur défini,
- enlèvement d'une ou plusieurs sections (5, 6, 10) du corps façonné tubulaire (2) pour réaliser le recouvrement d'arête en forme de V (11) .

2. Procédé selon la revendication 1, **caractérisé en ce que** le façonnage tridimensionnel s'effectue en deux étapes de façonnage séparées, dans une première étape de façonnage, un façonnage grossier étant effectué pour réaliser une forme enroulée correspondant à la forme enroulée de la zone d'arête à recouvrir et dans au moins une deuxième étape de façonnage, un façonnage fin étant effectué pour réaliser la géométrie tridimensionnelle de la paroi intérieure (4).

3. Procédé selon la revendication 1 ou 2, **caractérisé en ce que** le façonnage s'effectue de manière isothermique par pressage.

4. Procédé selon l'une quelconque des revendications précédentes, **caractérisé en ce que** la température lors du façonnage est de 600 à 1050 °C.

5. Procédé selon l'une quelconque des revendications précédentes, **caractérisé en ce que** la vitesse de façonnage est de 10⁻⁶ à 10⁻¹ s⁻¹.

6. Procédé selon l'une quelconque des revendications précédentes, **caractérisé en ce que** le façonnage s'effectue sous un gaz protecteur ou sous vide.

7. Procédé selon l'une quelconque des revendications précédentes, **caractérisé en ce que** l'on utilise un produit semi-fini tubulaire (1) étiré sans soudure ou soudé longitudinalement.

8. Procédé selon l'une quelconque des revendications précédentes, **caractérisé en ce que** des moyens de support du côté intérieur sont prévus dans le produit semi-fini tubulaire (1) pendant le façonnage et/ou dans le corps façonné tubulaire (2) pendant l'usinage mécanique du côté extérieur (7) et/ou au cours de l'enlèvement de la ou des portions (5, 6, 11) du corps façonné (2).

9. Procédé selon la revendication 8, **caractérisé en ce que** l'intérieur du produit semi-fini ou du corps façonné est rempli de poudre, en particulier de farine de zircone.

10. Procédé selon l'une quelconque des revendications précédentes, **caractérisé en ce que** le matériau (9) à appliquer est le même matériau que celui du corps façonné (2), ou **en ce que** l'on applique un matériau plus solide que le matériau du corps façonné (2).

11. Procédé selon l'une quelconque des revendications précédentes, **caractérisé en ce que** le matériau (9) est appliqué par soudage, en particulier par rechargement par soudage au laser ou par soudage WIG.

12. Procédé selon la revendication 11, **caractérisé en ce que** le matériau (9) est appliqué sous gaz protecteur ou sous vide.

13. Procédé selon l'une quelconque des revendications précédentes, **caractérisé en ce qu'**après l'application du matériau (9), on effectue un traitement thermique du corps façonné (2) en vue du recuit sans tension.

14. Procédé selon la revendication 13, **caractérisé en ce que** la température est de 650 à 850 °C et la durée est de 0,5 à 5 h.

15. Procédé selon l'une quelconque des revendications précédentes, **caractérisé en ce que** l'enlèvement de la ou des sections (5, 6, 10) du corps façonné (2) s'effectue par enlèvement de copeaux ou par sectionnement.

16. Procédé selon la revendication 15, **caractérisé en ce que** l'enlèvement par enlèvement de copeaux s'effectue par fraisage et le sectionnement s'effectue par découpage laser ou découpage par jet d'eau.

17. Procédé selon l'une quelconque des revendications précédentes, **caractérisé en ce que** l'on utilise produit semi-fini (1) composé d'un alliage de titane, en particulier de TiAl6V4, d'un matériau en acier ou d'un alliage à base de nickel.

18. Recouvrement d'arête, en particulier fabriqué selon le procédé selon l'une quelconque des revendications 1 à 17, constitué d'un corps façonné formé d'un tube façonné de manière tridimensionnelle et formé du côté de l'extrémité et longitudinalement par sectionnement de sections de tube, dont l'arête est formée par un revêtement métallique qui présente la même dureté ou qui est plus dur que le tube, le corps façonné et le revêtement métallique étant traités par enlèvement de matière du côté extérieur.
